# EUROPÄISCHE PATENTSCHRIFT

(11) **EP 4 239 233 B1**
(45) Veröffentlichungstag und Bekanntmachung des Hinweises auf die Patenterteilung: **25.12.2024**
(21) Anmeldenummer: 23153326.6
(22) Anmeldetag: 25.01.2023
(51) Int. Cl.: F16L 5/06, F16L 37/00, F16L 41/14, H02G 3/06

(54) **HALBVERSCHRAUBUNG UND VERFAHREN ZUR MONTAGE EINER HALBVERSCHRAUBUNG**
HALF SCREW AND METHOD FOR ASSEMBLING A HALF SCREW
DEMI-ÉCROU ET PROCÉDÉ D'ASSEMBLAGE D'UN DEMI-ÉCROU

(30) Priorität: 01.03.2022 DE 102022104790
(43) Veröffentlichungstag der Anmeldung: 06.09.2023
(73) Patentinhaber: CENA Kunststoff GmbH, 35088 Battenberg (DE)
(72) Erfinder: LIESE, Ralf, 59909 Bestwig (DE); SCHNARR, Karl, 35088 Battenberg (DE)
(74) Vertreter: Dantz, Jan Henning

(56) Entgegenhaltungen:
- EP-A1- 1 710 886
- GB-A- 1 269 499
- US-A- 2 537 183
- US-A1- 2002 006 309

## Beschreibung

Die vorliegende Erfindung betrifft eine Halbverschraubung zur Montage an einer Öffnung eines Wandelementes nach dem Oberbegriff des Anspruches 1 und ein Verfahren zur Montage einer Halbverschraubung.

Die EP 2 225 811 B1 offenbart eine Anschlussarmatur zur Befestigung von Schläuchen oder Kabeln an einer Öffnung einer Wand, bei der ein Spannelement mit Widerlagerzungen in die Öffnung eingefügt wird. Dieses Spannelement weist ein Außengewinde auf, das mit einem Innengewinde einer Schraubhülse verbunden wird. Eine hülsenförmige Sperre wird in das Spannelement eingeschoben, um eine Bewegung der Widerlagerzungen zu vermeiden. An der Schraubhülse ist eine Überwurfmutter fixiert. Der Aufbau dieser Anschlussarmatur erfordert eine Vielzahl von Einzelteilen und ist somit aufwändig in der Herstellung und in der Montage. Zudem lässt sich mit den vorkonfektionierten Bauteilen schlecht eine Anpassung an unterschiedliche Wanddicken vornehmen. Eine weitere Kabeldurchführung ist in der EP 1 710 886 offenbart.

Die nachveröffentlichte DE 10 2021 106 864 offenbart eine Halbverschraubung, die von einer Seite aus an einer Öffnung einer Wand angebracht werden kann und die ein Einsteckteil mit Rasthaken aufweist, die über ein Sicherungselement abstützbar sind. An einem Außengewinde des Einsteckteils ist eine Überwurfmutter fixiert, so dass die Halbverschraubung mit wenigen Bauteilen an der Gehäusewand fixierbar ist. Eine Anpassung an unterschiedliche Wandstärken ist auch hier nicht vorgesehen.

In der GB 1 269 499 ist eine Rohrverbindung offenbart, bei dem ein ringförmiger Abschnitt mit zwei biegbaren Armen mit nach außen ragenden Flanschabschnitten durch eine Öffnung einer Wand durchsteckbar ist. In den ringförmigen Abschnitt kann ein Rohrabschnitt mit einem Außengewinde eingedreht werden.

Es ist daher Aufgabe der vorliegenden Erfindung, eine Halbverschraubung und ein Verfahren zur Montage einer Halbverschraubung zu schaffen, die eine effektive Montage gewährleisten und eine Anpassung an unterschiedliche Wanddicken ermöglichen.

Diese Aufgabe wird mit einer Halbverschraubung mit den Merkmalen des Anspruches 1 sowie einem Verfahren mit den Merkmalen des Anspruches 12 gelöst.

Die erfindungsgemäße Halbverschraubung kann an einer Öffnung eines Wandelementes montiert werden, beispielsweise eines Gehäuses, eines Schrankes, insbesondere zur Durchführung von Schläuchen, Rohren oder Kabeln. Die Halbverschraubung umfasst ein hülsenförmiges Spannelement mit mindestens einem Federsteg mit mindestens einem nach radial nach außen hervorstehenden Vorsprung zum Hintergreifen des Wandelementes, und einen Zwischenstutzen mit einem ersten Gewinde und einem zweiten Gewinde, wobei an dem ersten Gewinde eine Überwurfmutter aufgeschraubt ist. An dem zweiten Gewinde des Zwischenstutzens, das als Außengewinde ausgebildet ist, ist ein Innengewinde an dem Spannelement aufgeschraubt, und der mindestens eine Federsteg ist durch einen Endabschnitt des Zwischenstutzens an einer radial inneren Seite abstützbar. Dadurch kann die Einstecktiefe des Zwischenstutzens in das Spannelement flexibel angepasst werden, je nachdem, wie weit das Innengewinde des Zwischenstutzens in das Spannelement eingeschraubt wird. Dies ermöglicht eine einfache Anpassung an unterschiedliche Wanddicken des Wandelementes und sorgt zudem für eine einfache Montage der Halbverschraubung, da der Zwischenstutzen auf einer Seite in das Spannelement eingeschraubt ist und auf der gegenüberliegenden Seite zur Fixierung der Überwurfmutter dient. Eine Halbverschraubung ist dabei eine Kabeldurchführung oder Kabelverschraubung, bei der nur auf einer Seite eines Wandelementes eine Fixierung durch Verschrauben erfolgt, in der Regel an der äußeren Seite oder Hälfte eines Wandelementes.

Vorzugsweise weist das Spannelement an einem hülsenförmigen Abschnitt das Innengewinde auf. Dabei kann das Spannelement in axiale Richtung geschlitzt ausgebildet sein, um auf einen länglichen Gegenstand montiert werden zu können. Das Innengewinde kann dabei durch einzelne Segmente, Vorsprünge oder durch eine vollständige Gewindewindung gebildet sein. Die Art des Innengewindes kann an den jeweiligen Belastungsfall angepasst sein.

An dem hülsenförmigen Abschnitt erstrecken sich vorzugsweise mehrere Federstege in axiale Richtung, die in der montierten Position das Wandelement hintergreifen. Die Federstege können dabei über Schlitze oder Öffnungen beabstandet voneinander angeordnet sein. Für eine effektive Zentrierung können drei Federstege über den Umfang verteilt vorgesehen sein.

Zur Fixierung der Halbverschraubung an dem Wandelement ist erfindungsgemäß auf das zweite Gewinde des Zwischenstutzens eine Mutter aufgeschraubt, die in axiale Richtung mit dem Spannelement verspannbar ist. Nach einer Sicherung des mindestens einen Federsteges gegen eine Durchbiegung radial nach innen kann die Mutter so weit auf das zweite Gewinde des Zwischenstutzens aufgeschraubt werden, bis die Mutter unmittelbar oder mittelbar an dem Wandelement anliegt und somit den Zwischenstutzen und das Spannelement in axiale Richtung aus der Öffnung des Wandelementes herauszieht, bis der mindestens eine Vorsprung an dem Federsteg an dem Wandelement anliegt und verspannt ist. Dies sorgt für eine stabile Fixierung der Halbverschraubung. Optional kann dabei zwischen der Mutter und dem Wandelement eine elastische Dichtung vorgesehen sein, um eine Abdichtung zu bewirken. Die Mutter kann am äußeren Umfang mit einem Mehrkant ausgebildet sein oder als Rändelmutter, bei der am äußeren Umfang eine Riffelung oder Verzahnung vorgesehen ist. Eine solche Riffelung oder Verzahnung lässt sich auch durch ein Werkzeug antreiben, um die Halbverschraubung effektiv montieren zu können.

In einer weiteren Ausgestaltung ist an dem Zwischenstutzen integral ein Mehrkant für ein Werkzeug ausgebildet, beispielsweise ein Sechskant oder ein Vierkant, so dass bei der Montage mit einem ersten Werkzeug der Zwischenstutzen gedreht oder fixiert werden kann und mit einem zweiten Werkzeug die Mutter gedreht oder fixiert werden kann. Der Mehrkant kann dabei zwischen dem ersten Gewinde und dem zweiten Gewinde ausgebildet sein, die optional einen unterschiedlichen Durchmesser aufweisen können, um eine Fehlmontage zu vermeiden. Alternativ können die beiden Gewinde auch den gleichen Außendurchmesser besitzen.

Um eine verbesserte Abdichtung mit wenig Bauteilen zu erreichen, kann an dem zweiten Gewinde des Zwischenstutzens endseitig ein Käfig durch mehrere axial hervorstehende Stege gebildet sein. An den Stegen des Käfigs ist bevorzugt ein ringförmiges Dichtelement aus einem elastischen Material gehalten, das beim Anschrauben der Überwurfmutter gegen einen länglichen Gegenstand, wie einen Schlauch oder Kabel, für eine Abdichtung gedrückt wird.

Die Abdichtung an der Halbverschraubung kann weiter verbessert werden, wenn auch zwischen den Mehrkant und der Mutter eine Dichtung vorgesehen ist, so dass nach Montage der Mutter der Mehrkant auf die Mutter unter Zwischenschaltung einer Dichtung geschraubt wird.

Für eine effektive Montage kann die Mutter und/oder das Spannelement an einer Innenseite ein segmentiertes Gewinde aufweisen. Das Gewinde kann optional so ausgebildet sein, dass bei Überschreiten einer vorbestimmten Kraft in axiale Richtung ein axiales Verschieben ermöglicht wird und nur die Feinjustierung über ein Drehen der Gewinde erfolgt. Die Muster, das Spannelement und/oder der Zwischenstutzen können als Spritzgußteile aus Kunststoff hergestellt sein, alternativ auch ganz oder teilweise aus Metall.

Bei einem erfindungsgemäßen Verfahren zur Montage einer Halbverschraubung an einer Öffnung eines Wandelementes wird zunächst ein hülsenförmiges Spannelement mit mindestens einem Federsteg mit einem radial nach außen hervorstehenden Vorsprung durch eine Öffnung eines Wandelementes gesteckt, so dass der mindestens eine Vorsprung das Wandelement hintergreift. Anschließend wird ein äußeres Gewinde eines Zwischenstutzens in ein Innengewinde des Spannelementes eingeschraubt, bis der mindestens eine Federsteg an einer Innenseite gegen eine radial nach innen gerichtete Bewegung zumindest teilweise abgestützt ist. Dadurch kann die Eindrehtiefe des Zwischenstutzens über die Gewindeverbindung einfach verstellt werden, was die Montage vereinfacht und eine Anpassung an unterschiedliche Wanddicken ermöglicht.

Erfindungsgemäß wird an dem äußeren Gewinde des Zwischenstutzens auch eine Mutter zu dem Zwischenstutzen aufgeschraubt, bis die Mutter an einem Wandelement mittelbar oder unmittelbar anliegt und den mindestens einen Vorsprung an dem mindestens einen Federsteg in axiale Richtung zu dem Wandelement hin vorspannt.

Die Erfindung wird nachfolgend anhand eines Ausführungsbeispiels mit Bezug auf die nachfolgenden Zeichnungen näher erläutert. Es zeigen:
- Figur 1: eine Ansicht einer erfindungsgemäßen Halbverschraubung in einer montierten Position;
- Figur 2: eine Explosionsdarstellung der Halbverschraubung der Figur 1;
- Figur 3: eine perspektivische Ansicht der Halbverschraubung der Figur 2;
- Figur 4: eine Schnittansicht der Halbverschraubung der Figur 3;
- Figuren 5A und 5B: zwei Ansichten des Zwischenstutzens der Halbverschraubung;
- Figuren 6A und 6B: zwei Ansichten des Spannelementes der Halbverschraubung;
- Figuren 7A und 7B: zwei Ansichten der Mutter der Halbverschraubung;
- Figur 8: eine Ansicht einer Halbverschraubung gemäß einem modifizierten Ausführungsbeispiel, und
- Figur 9: eine perspektivische Ansicht der Mutter der Halbverschraubung der Figur 8.

Eine Halbverschraubung 1 dient zur Fixierung eines länglichen Gegenstandes 9, wie einem Kabel, einem Rohr oder einer Leitung zur Durchführung an einer Öffnung eines Wandelementes 10, beispielsweise eines Schaltschrankes oder eines anderen Bauteils.

Die Halbverschraubung 1 umfasst ein Spannelement 2, das mit mehreren über den Umfang verteilten Federstegen 20 durch die Öffnung in dem Wandelement 10 durchgesteckt ist. Die biegbaren Federstege 20 weisen auf der radial äußeren Seite jeweils einen hervorstehenden Vorsprung 21 auf, der in der montierten Position an einer Seite des Wandelementes 10 zur Anlage kommt. Ferner sind die Federstege 20 im Bereich des Vorsprunges 21 mit einer Anlaufschräge 22 versehen, die dafür sorgt, dass die Federstege 20 beim Durchstecken durch die Öffnung radial nach innen gebogen werden können, um hinter der Öffnung dann zu verrasten.

Das Spannelement 2 ist an einem Zwischenstutzen 3 fixiert, auf den an einem ersten Gewinde 31 eine Überwurfmutter 4 aufgeschraubt ist. Durch die Überwurfmutter 4 und den Zwischenstutzen 3 ist der längliche Gegenstand 9 durchgeführt und fixiert.

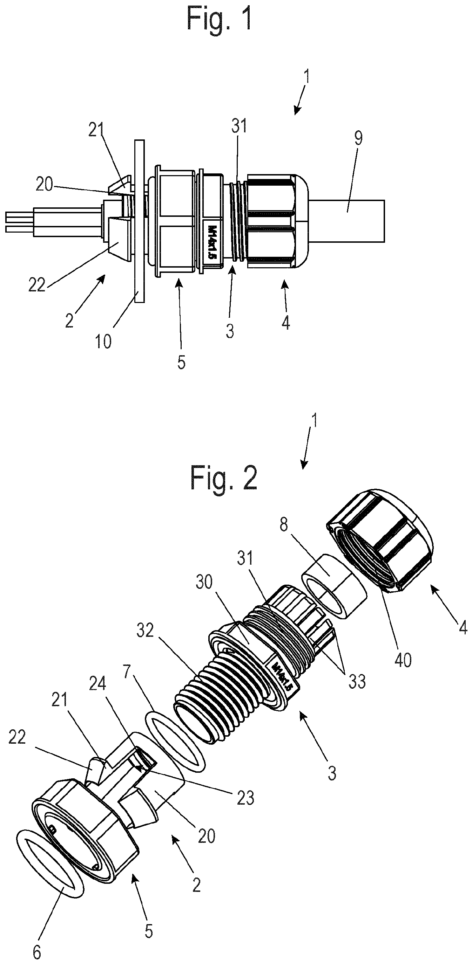

Wie in Figur 2 gezeigt ist, besitzt das Spannelement 2 einen hülsenförmigen Abschnitt, der nicht vollständig ringförmig ausgebildet sein muss und beispielsweise einen Schlitz oder eine Aussparung umfassen kann. An dem hülsenförmigen Abschnitt ist ein Innengewinde 24 ausgebildet, das durch segmentierte Abschnitte oder durch eine oder mehrere Windungen gebildet ist. Von dem hülsenförmigen Abschnitt erstrecken sich die Federstege 20 in axiale Richtung, wobei zwischen den Federstegen 20 Öffnungen oder Aussparungen 23 vorgesehen sind, so dass die Federstege 20 unabhängig voneinander verschwenkbar sind.

Der Zwischenstutzen 3 umfasst auf der zu dem Spannelement 2 abgewandten Seite das erste Gewinde 31 zur Fixierung der Überwurfmutter 4 und auf der gegenüberliegenden Seite einen hülsenförmigen Abschnitt mit einem zweiten Gewinde 32, das als Außengewinde ausgebildet ist. Zwischen dem ersten Gewinde 31 und dem zweiten Gewinde 32 ist ein Mehrkant 30, insbesondere ein Sechskant, integral ausgebildet, um den Zwischenstutzen 3 relativ zu der Überwurfmutter 4 oder einer weiteren Mutter 5 zu drehen. An dem ersten Gewinde 31 ist in axiale Richtung ein Käfig aus mehreren Stegen 33 ausgebildet, in die ein ringförmiges Dichtelement 8 eingefügt ist. Durch Aufschrauben der Überwurfmutter 4 kann das Dichtelement 8 gegen den länglichen Gegenstand 9 zur Abdichtung gedrückt werden.

Die Halbverschraubung 1 umfasst ferner eine Mutter 5, die auf das zweite Gewinde 32 des Zwischenstutzens 3 aufschraubbar ist. Zwischen der Mutter 5 und dem Mehrkant 30 ist eine Dichtung 7 vorgesehen, die beispielsweise als O-Ring ausgebildet ist.

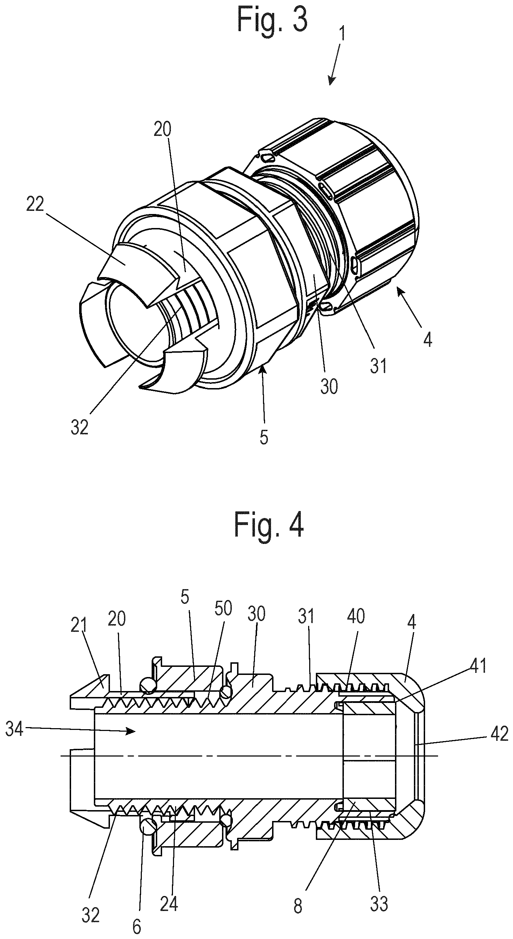

In den Figuren 3 und 4 ist die Halbverschraubung 1 zusammengesetzt dargestellt, und es ist erkennbar, dass auf das zweite Gewinde 32 des Zwischenstutzens das Innengewinde des 24 des Spannelementes 2 aufgeschraubt ist. Dabei ist das Gewinde 32 des Zwischenstutzens so weit in das Spannelement 2 eingeschraubt, dass die Federstege 20 an einer Innenseite abgestützt sind und somit in der montierten Position nicht mehr nach innen verbiegen können, um die Halbverschraubung 1 an dem Wandelement 10 zu fixieren. Das zweite Gewinde 32 ist vorzugsweise über mindestens 50 % der Länge der Federstege 20 eingeschraubt, beispielsweise zwischen 60 bis 90 % der Länge.

Auf dem zweiten Gewinde 32 ist ferner die Mutter 5 aufgeschraubt, die in der montierten Position für ein Verspannen des Spannelementes 2 sorgt. Hierfür wird die Mutter 5 so weit in Richtung des Wandelementes 10 verschraubt, bis diese unmittelbar oder über Zwischenschaltung einer Dichtung 6, insbesondere eines O-Ringes, an dem Wandelement 10 anliegt. Dann wird über das Verschrauben der Mutter 5 das Spannelement 2 aus der Öffnung in dem Wandelement 10 herausgezogen, bis die Vorsprünge 21 an dem Wandelement 10 zur Anlage kommen. Durch Drehen der Mutter 5 kann dabei eine Anpassung an unterschiedliche Wanddicken des Wandelementes 10 vorgenommen werden, beispielsweise kann die Halbverschraubung an Wandelementen 10 mit einer Dicke zwischen 1 mm bis 10 mm, insbesondere 2 mm bis 5 mm, fixiert werden.

In dem Zwischenstutzen 3 ist eine Durchführung 34 für den länglichen Gegenstand 9 ausgebildet, die im Bereich der Überwurfmutter 4 von dem Dichtelement 8 gebildet ist. Die Überwurfmutter 4 weist neben dem Innengewinde 40 einen schräg nach innen gerichteten Klemmabschnitt 41 auf, so dass beim Aufschrauben der Überwurfmutter 4 die Stege 33 mit dem Dichtelement 8 nach innen gegen den länglichen Gegenstand 9 gedrückt werden.

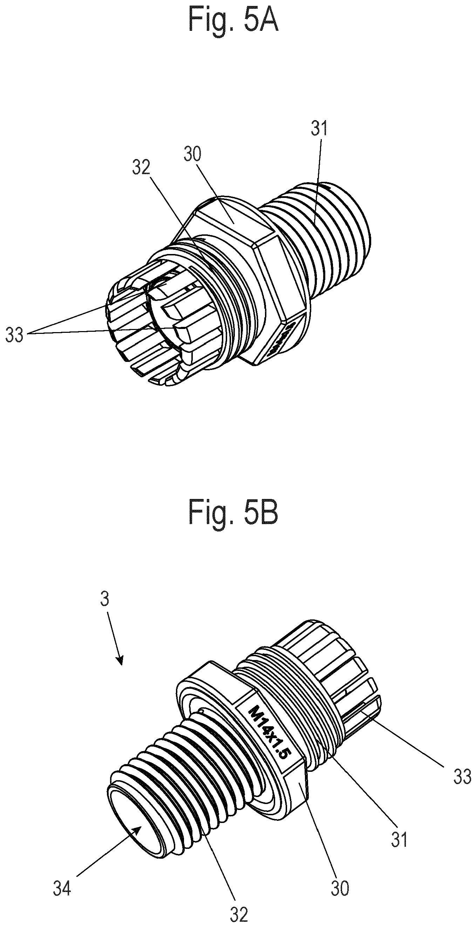

In den Figuren 5A und 5B ist der Zwischenstutzen 3 gezeigt, bei dem der Mehrkant 30 zwischen dem ersten Gewinde 31 und dem zweiten Gewinde 32 angeordnet ist. Das erste Gewinde 31 besitzt einen größeren Durchmesser als das zweite Gewinde 32, wobei die Querschnittskontur der Durchführung 34 konstant ist.

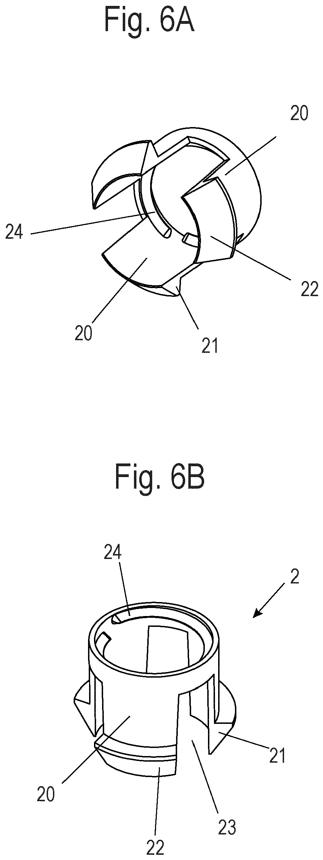

In den Figuren 6A und 6B ist das Spannelement 2 gezeigt, das an einem hülsenförmigen Abschnitt das Innengewinde 24 aufweist und drei Federstege 20 umfasst, zwischen denen jeweils Aussparungen 23 ausgebildet sind.

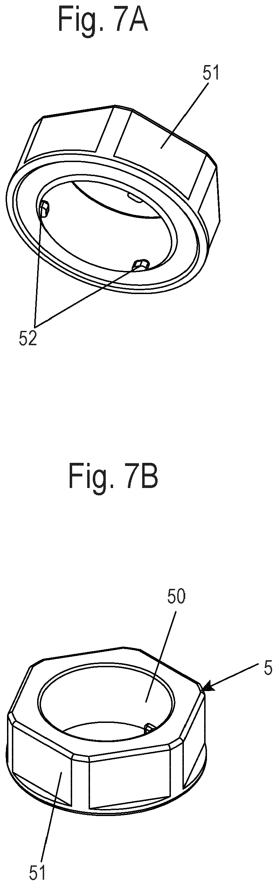

In den Figuren 7A und 7B ist die Mutter 5 gezeigt, die am äußeren Umfang einen Mehrkant 51 besitzt, der ein Innengewinde 50 umgibt, das optional als segmentiertes Gewinde ausgebildet sein kann. An der Mutter 5 sind ferner drei Vorsprünge 52 ausgebildet, die in die Aussparungen 23 an dem Spannelement 2 einfügbar sind, um das Spannelement 2 drehfest anzuordnen, wenn der Zwischenstutzen 3 mit dem zweiten Gewinde 32 in das Spannelement 2 eingeschraubt wird.

Zur Montage wird zunächst das Spannelement 2 in die Öffnung an dem Wandelement 10 eingesteckt, bis die Vorsprünge 21 an einer Rückseite des Wandelementes 10 angeordnet sind. Die Federstege 20 werden nun gegen eine Biegung nach innen gesichert, indem der Zwischenstutzen 3 mit dem zweiten Gewinde 32 in das Spannelement 2 eingeschraubt wird. Im nächsten Schritt wird die Mutter 5 so weit auf dem Gewinde 32 verschraubt, bis das Spannelement über die Vorsprünge 21 in Richtung des Wandelementes 10 verspannt wird und die Mutter 5 unmittelbar oder mittelbar, beispielsweise über Dichtungen 6, an dem Wandelement 10 anliegt. Dadurch ist die Halbverschraubung 1 durch Verspannen an dem Wandelement 10 fixiert, wobei die Dicke des Wandelementes 10 variabel gestaltet sein kann, da die Mutter 5 über die Gewindeverbindung axial verstellbar ist. Die Montage kann optional mit vormontierten Kabeln erfolgen, wobei dies auch nachträglich noch in die Halbverschraubung 1 eingesteckt werden kann.

In dem dargestellten Ausführungsbeispiel ist die Mutter 5 separat von dem Spannelement 2 ausgebildet, um die Halbverschraubung 1 an dem Wandelement 10 zu fixieren. Es ist auch möglich, die Mutter 5 integral mit dem Spannelement 2 auszubilden.

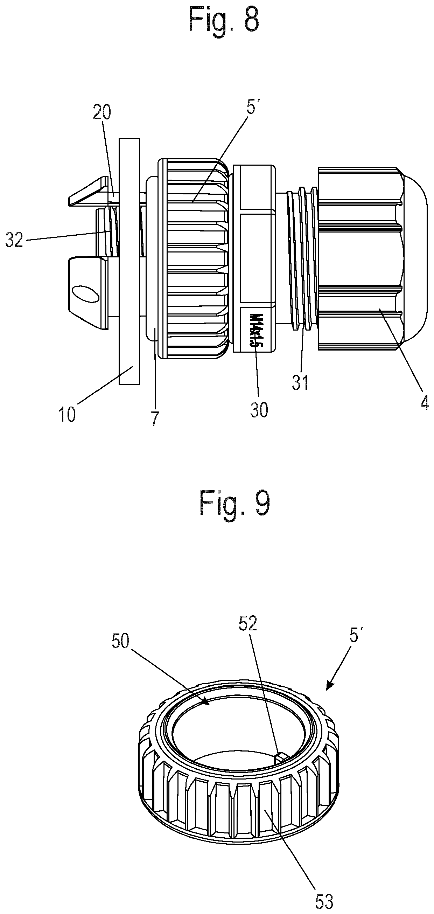

In Figur 8 ist ein modifiziertes Ausführungsbeispiel gezeigt, bei dem eine modifizierte Mutter 5' auf das zweite Gewinde 32 des Zwischenstutzens 3 aufgeschraubt ist. Im Übrigen entspricht das Ausführungsbeispiel dem ersten Ausführungsbeispiel mit dem Spannelement 2, das durch eine Öffnung des Wandelementes 10 durchgesteckt ist und bei dem die Federstege 20 an der Innenseite durch das zweite Gewinde 32 abgestützt sind. Die Mutter 5' besitzt am äußeren Umfang keinen Mehrkant, sondern ist als Rändelmutter ausgebildet mit einer am Umfang angeordneten Verzahnung oder Riffelung.

In Figur 9 ist die Mutter 5' im Detail gezeigt. An einem inneren Umfang ist ein Gewinde 50 vorgesehen, das aus mehreren nach innen ragenden Vorsprüngen 52 gebildet ist, die auf das zweite Gewinde 32 aufschraubbar sind. Am äußeren Umfang besitzt die Mutter 5' eine Verzahnung 53 oder Riffelung, die in Eingriff mit einem drehbaren Antriebswerkzeug gebracht werden kann, was für eine automatisierte oder halbautomatisierte Montage vorteilhaft ist.

### Bezugszeichenliste

- 1: Halbverschraubung
- 2: Spannelement
- 3: Zwischenstutzen
- 4: Überwurfmutter
- 5, 5`: Mutter
- 6: Dichtung
- 7: Dichtung
- 8: Dichtelement
- 9: länglicher Gegenstand
- 10: Wandelement
- 20: Federsteg
- 21: Vorsprung
- 22: Anlaufschräge
- 23: Aussparung
- 24: Innengewinde
- 30: Mehrkant
- 31: Gewinde
- 32: Gewinde
- 33: Steg
- 34: Durchführung
- 40: Innengewinde
- 41: Klemmabschnitt
- 50: Innengewinde
- 51: Mehrkant
- 52: Vorsprung
- 53: Verzahnung

## Patentansprüche

1. Halbverschraubung (1) zur Montage an einer Öffnung eines Wandelemente (10), mit einem hülsenförmigen Spannelement (2), an dem mindestens ein Federsteg (20) mit mindestens einem nach außen hervorstehenden Vorsprung (21) zum Hintergreifen des Wandelementes (10) vorgesehen ist, und einem Zwischenstutzen (3) mit einem ersten Gewinde (31) und einem zweiten Gewinde (32), wobei das zweite Gewinde (32) des Zwischenstutzens (3) als Außengewinde ausgebildet ist und auf ein Innengewinde (24) an dem Spannelement (2) aufgeschraubt ist und der mindestens eine Federsteg (20) durch einen Endabschnitt des Zwischenstutzens (3) an einer radial inneren Seite abstützbar ist, **dadurch gekennzeichnet, dass** an dem ersten Gewinde (31) eine Überwurfmutter (4) aufgeschraubt ist und auf das zweite Gewinde (32) des Zwischenstutzens (3) eine Mutter (5, 5') aufgeschraubt ist, die in axiale Richtung mit dem Spannelement (2) verspannbar ist.

2. Halbverschraubung nach Anspruch 1, **dadurch gekennzeichnet, dass** das Spannelement (2) an einem hülsenförmigen Abschnitt das Innengewinde (24) aufweist.

3. Halbverschraubung nach Anspruch 2, **dadurch gekennzeichnet, dass** mehrere Federstege (20) an dem Spannelement (2) sich von dem hülsenförmigen Abschnitt im Wesentlichen in axiale Richtung erstrecken.

4. Halbverschraubung nach einem der vorhergehenden Ansprüche, **dadurch gekennzeichnet, dass** zwischen der Mutter (5, 5') und dem Wandelement (10) eine Dichtung (6) vorgesehen ist.

5. Halbverschraubung nach einem der vorhergehenden Ansprüche, **dadurch gekennzeichnet, dass** die Mutter (5') als Rändelmutter mit einer Riffelung oder Verzahnung am äußeren Umfang ausgebildet ist.

6. Halbverschraubung nach einem der vorhergehenden Ansprüche, **dadurch gekennzeichnet, dass** an dem Zwischenstutzen (3) integral ein Mehrkant (30) für ein Werkzeug ausgebildet ist.

7. Halbverschraubung nach Anspruch 7, **dadurch gekennzeichnet, dass** der Mehrkant (30) zwischen dem ersten Gewinde (31) und dem zweiten Gewinde (32) ausgebildet ist.

8. Halbverschraubung nach einem der vorhergehenden Ansprüche, **dadurch gekennzeichnet, dass** an dem zweiten Gewinde (32) des Zwischenstutzens (3) endseitig axial hervorstehende Stege (33) zur Ausbildung eines Käfigs integral ausgebildet sind.

9. Halbverschraubung nach Anspruch 8, **dadurch gekennzeichnet, dass** an den Stegen (33) des Käfigs ein ringförmiges Dichtelement (8) gehalten ist.

10. Halbverschraubung nach einem der Ansprüche, **dadurch gekennzeichnet, dass** zwischen dem Mehrkant (30) und der Mutter (5, 5') eine Dichtung (7) vorgesehen ist.

11. Halbverschraubung nach einem der vorhergehenden Ansprüche, **dadurch gekennzeichnet, dass** die Mutter (5, 5') und/oder das Spannelement (2) an einer Innenseite ein segmentiertes Gewinde aufweisen.

12. Verfahren zur Montage einer Halbverschraubung (1), nach einem der vorhergehenden Ansprüche, an einer Öffnung eines Wandelementes (10), mit den folgenden Schritten:
- Einstecken eines hülsenförmigen Spannelementes (2) mit mindestens einem Federsteg (20) mit mindestens einem nach außen hervorstehenden Vorsprung (21) durch eine Öffnung eines Wandelementes (10), so dass der mindestens eine Vorsprung (21) das Wandelement (10) hintergreift, und
- Einschrauben eines äußeren Gewindes (32) eines Zwischenstutzens (3) in ein Innengewinde (24) des Spannelementes (2), bis der mindestens eine Federsteg (20) an einer inneren Seite gegen eine radial nach innen gerichtete Bewegung zumindest teilweise abgestützt ist, **dadurch gekennzeichnet, dass** an einem äußeren Gewinde (32) eine Mutter (5, 5') relativ zu dem Zwischenstutzen (3) gedreht wird, bis die Mutter (5, 5') den mindestens einen Vorsprung (21) an dem Federsteg (20) in axiale Richtung zu dem Wandelement (10) hin vorspannt.

## Claims

1. Half-screw connection (1) for mounting on an opening of a wall element (10), having a sleeve-shaped clamping element (2), on which at least one spring web (20) with at least one outwardly protruding projection (21) is provided for engaging behind the wall element (10), and an intermediate connection piece (3) having a first thread (31) and a second thread (32), wherein the second thread (32) of the intermediate connection piece (3) is designed as an external thread and is screwed onto an internal thread (24) on the clamping element (2) and the at least one spring web (20) can be supported by an end section of the intermediate connection piece (3) on a radially inner side, **characterized in that** a union nut (4) is screwed onto the first thread (31) and a nut (5, 5') is screwed onto the second thread (32) of the intermediate connection piece (3), which nut can be braced in the axial direction with the clamping element (2).

2. Half-screw connection according to claim 1, **characterized in that** the clamping element (2) has the internal thread (24) on a sleeve-shaped section.

3. Half-screw connection according to claim 2, **characterized in that** a plurality of spring webs (20) on the clamping element (2) extend from the sleeve-shaped section substantially in the axial direction.

4. Half-screw connection according to one of the preceding claims, **characterized in that** a seal (6) is provided between the nut (5, 5') and the wall element (10).

5. Half-screw connection according to one of the preceding claims, **characterized in that** the nut (5') is designed as a knurled nut with a corrugation or toothing on the outer circumference.

6. Half-screw connection according to one of the preceding claims, **characterized in that** a polygon (30) for a tool is integrally formed on the intermediate connection piece (3).

7. Half-screw connection according to claim 6, **characterized in that** the polygon (30) is formed between the first thread (31) and the second thread (32).

8. Half-screw connection according to one of the preceding claims, **characterized in that** axially protruding webs (33) are integrally formed at the end of the second thread (32) of the intermediate connection piece (3) to form a cage.

9. Half-screw connection according to claim 8, **characterized in that** an annular sealing element (8) is held on the webs (33) of the cage.

10. Half-screw connection according to one of the claims, **characterized in that** a seal (7) is provided between the polygon (30) and the nut (5, 5').

11. Half-screw connection according to one of the preceding claims, **characterized in that** the nut (5, 5') and/or the clamping element (2) have a segmented thread on an inner side.

12. Method for mounting a half-screw connection (1), according to one of the preceding claims, on an opening of a wall element (10), comprising the following steps:
- inserting a sleeve-shaped clamping element (2) having at least one spring web (20) with at least one outwardly protruding projection (21) through an opening of a wall element (10), so that the at least one projection (21) engages behind the wall element (10), and
- screwing an external thread (32) of an intermediate connection piece (3) into an internal thread (24) of the clamping element (2), until the at least one spring web (20) is at least partially supported on an inner side against a radially inwardly directed movement, **characterized in that** a nut (5, 5') is rotated on an outer thread (32) relative to the intermediate connection piece (3) until the nut (5, 5') pretensions the at least one projection (21) on the spring web (20) in the axial direction towards the wall element (10).

## Revendications

1. Demi-écrou (1) à monter sur une ouverture d'un élément de paroi (10), avec un élément de serrage (2) en forme de douille sur lequel est prévue au moins une barrette de ressort (20) munie d'au moins une saillie (21) dépassant vers l'extérieur et destinée à passer derrière l'élément de paroi (10) et avec un raccord intermédiaire (3) muni d'un premier filet (31) et d'un deuxième filet (32), le deuxième filet (32) du raccord intermédiaire (3) étant conformé comme un filetage extérieur et étant vissé sur un filetage intérieur (24) de l'élément de serrage (2) et l'au moins une barrette de ressort (20) pouvant être soutenue par un segment d'extrémité du raccord intermédiaires (3) sur un côté intérieur dans le sens radial, **caractérisé en ce qu'**un écrouraccord (4) est vissé sur le premier filet (31) et un écrou (5, 5') pouvant être serré dans le sens axial avec l'élément de serrage (2) est vissé sur le deuxième filet (32) du raccord intermédiaire (3).

2. Demi-écrou selon la revendication 1, **caractérisé en ce que** l'élément de serrage (2) présente le filetage intérieur (24) sur un segment en forme de douille.

3. Demi-écrou selon la revendication 2, **caractérisé en ce que** plusieurs barrettes de ressort (20) s'étendent sensiblement dans le sens axial sur l'élément de serrage (2) à partir du segment en forme de douille.

4. Demi-écrou selon l'une des revendications précédentes, **caractérisé en ce qu'**un joint d'étanchéité (6) est prévu entre l'écrou (5, 5') et l'élément de paroi (10).

5. Demi-écrou selon l'une des revendications précédentes, **caractérisé en ce que** l'écrou (5') est conformé comme un écrou moleté muni d'un rainurage ou d'une denture sur sa circonférence extérieure.

6. Demi-écrou selon l'une des revendications précédentes, **caractérisé en ce qu'**un polygone (30) pour un outil est formé d'une pièce sur le raccord intermédiaire (3).

7. Demi-écrou selon la revendication 6, **caractérisé en ce que** le polygone (30) est formé entre le premier filet (31) et le deuxième filet (32).

8. Demi-écrou selon l'une des revendications précédentes, **caractérisé en ce que** sont formées d'une pièce sur le deuxième filet (32) du raccord intermédiaire (3) des barrettes (33) qui dépassent à l'extrémité dans le sens axial pour former une cage.

9. Demi-écrou selon la revendication 8, **caractérisé en ce qu'**un élément d'étanchéité annulaire (8) est retenu sur les barrettes (33) de la cage.

10. Demi-écrou selon l'une des revendications, **caractérisé en ce qu'**un joint d'étanchéité (7) est prévu entre le polygone (30) et l'écrou (5, 5')

11. Demi-écrou selon l'une des revendications précédentes, **caractérisé en ce que** l'écrou (5, 5') et/ou l'élément de serrage (2) présentent un filetage segmenté sur une face intérieure.

12. Procédé pour le montage d'un demi-écrou (1) selon l'une des revendications précédentes sur une ouverture d'un élément de paroi (10), comprenant les étapes suivantes :
- insertion d'un élément de serrage (2) en forme de douille, muni d'au moins une barrette de ressort (20) comportant au moins une saillie (21) en relief vers l'extérieur, à travers une ouverture d'un élément de paroi (10), de sorte que l'au moins une saillie (21) passe derrière l'élément de paroi (10), et
- vissage d'un filetage extérieur (32) d'un raccord intermédiaire (3) dans un filetage intérieur (24) de l'élément de serrage (2) jusqu'à ce que l'au moins une barrette de ressort (20) s'appuie au moins en partie sur un côté intérieur pour empêcher un mouvement dirigé vers l'intérieur dans le sens radial, **caractérisé en ce qu'**un écrou (5, 5') est tourné sur un filetage extérieur (32) par rapport au raccord intermédiaire (3) jusqu'à ce que l'écrou (5, 5') précontraigne l'au moins une saillie (21) sur la barrette de ressort (20) dans le sens axial vers l'élément de paroi (10).
